# EUROPÄISCHE PATENTSCHRIFT

(11) **EP 0 950 822 B1**
(45) Veröffentlichungstag und Bekanntmachung des Hinweises auf die Patenterteilung: **28.08.2002**
(21) Anmeldenummer: 99105538.5
(22) Anmeldetag: 18.03.1999
(51) Int. Cl.: F16B 39/24

(54) **Sicherungsscheibe**
Locking washer
Rondelle d'arrêt

(30) Priorität: 16.04.1998 DE 29806800 U
(43) Veröffentlichungstag der Anmeldung: 20.10.1999
(73) Patentinhaber: BENTELER AG, D-33104 Paderborn (DE)
(72) Erfinder: Böhmer, Werner, 34439 Willebadessen (DE); Metze, Dominik, 33106 Paderborn (DE)
(74) Vertreter: Ksoll, Peter, Dr.-Ing.

(56) Entgegenhaltungen:
- DE-U- 8 300 961
- FR-A- 991 258
- GB-A- 386 303
- US-A- 1 406 423
- US-A- 3 212 387

## Beschreibung

Die Erfindung betrifft eine Sicherungsscheibe für zwei verdrehfest miteinander zu verbindende Bauteile.

Als Zwischenlage zwischen zwei Bauteilen, geklemmt durch eine Schraube oder eine Mutter kommen in der Regel ringförmige metallische Unterlegscheiben zum Einsatz. Sie sollen Oberflächenbeschädigungen vermeiden sowie die Pressung vermindern.

Schraubensicherungen in Form von Federringen, Fächerscheiben, Zahnscheiben oder Sprengringen, die der Mutter untergelegt werden, finden Verwendung, um ein ungewolltes Lösen von Befestigungsschrauben zu verhüten. Solche Schraubensicherungen sollen Kriech- und Setzbeträge ausgleichen und verhindern, dass die Vorspannkraft der Verbindung in unzulässigem Maße abnimmt. Ein Verdrehen von zwei miteinander verbundenen Bauteilen können solche Schraubensicherungen nur bedingt verhindern. Dies gilt insbesondere, wenn die Bauteile größeren dynamischen Belastungen, insbesondere schwingender Art, unterworfen sind.

Aus der DE-PS 302 815 geht eine aus einer Unterlegscheibe bestehende Schraubensicherung mit Sperrorganen hervor, bei der die Sperrorgane aus einer Anzahl Draht- oder Blechstücken bestehen. Die Sperrorgane sollen so dünn sein, dass sie beim Festziehen der Mutter keinen merklichen Widerstand bieten. Bei einer gewaltsamen Lösung der Mutter sollen die Sperrorgane allmählich nachgeben, jedoch ein selbsttätiges Lösen der Mutter verhindern. In gleicher Weise ist die aus der DE-PS 328 001 bekannte Schraubendichtung aufgebaut, bei der die Sperrorgane von Lamellen gebildet sind, welche ganz oder teilweise in der Scheibe eingebettet liegen. Beim Lösen soll sich die Lamelle mit ihren Enden gegen Unebenheiten der sie begrenzenden Metallteile anstellen und der Mutter der Schraubverbindung einen Widerstand entgegenrichten.

Bei beiden der vorgenannten Schraubensicherungen muss das Einbettungsmaterial an den Einbettungsstellen nachgiebig sein, um den Sperrorganen die nötige Bewegungsfreiheit zu geben. Es ist daher vorgesehen, die Unterlegscheibe aus nachgiebigem Metall oder ähnlichen nachgiebigen Stoffen wie Fiber, Astbest, Leder oder Tuch auszubilden. Hieraus ergeben sich jedoch sicherheitstechnische Bedenken, da ein Ermüden des Werkstoffs in festigkeitskritischen Bereichen bei andauernder dynamischer Belastung zu befürchten ist.

Die FR-A-991 258 offenbart eine Sicherungsscheibe für zwei verdrehfest miteinander zu verbindende Bauteile, welche eine doppellagige Scheibe vorsieht von denen die untere vorstehende Formschlusskörper in Form von Kugeln besitzt, die in Ausnehmungen der unteren Scheibe aufgenommen sind. Zur Gewährleistung einer Verdrehsicherung weist die obere Scheibe umlegbare Laschen auf, die nach der Montage umgebogen werden können und so eine Verdrehsicherung bewirken können.

Im Rahmen der GB-A-386 303 ist eine Anordnung bekannt, bei der sich die Formkörper im Scheibenkörper radial während der Verbindung der Bauteile bewegen können und so einen Abstandsausgleich bewirken können.

Der Erfindung liegt daher ausgehend vom Stand der Technik die Aufgabe zugrunde, eine Sicherungsscheibe als Zwischenlage für zwei zu verbindende Bauteile zu schaffen, welche fertigungstechnisch einfach und rationell herzustellen ist und zuverlässig ein Verdrehen bzw. Verrutschen der verbundenen Bauteile relativ zueinander vermeidet.

Die Lösung dieser Aufgabe besteht nach der Erfindung in einer Sicherungsscheibe gemäß den Merkmalen des Anspruchs 1, bei der in Richtung auf die zu verbindenden Bauteile vorstehende Formschlusskörper in Ausnehmungen ihres Scheibenkörpers festgelegt sind, wobei die Formschlusskörper durch in die Ausnehmungen eingepresste Stahlkugeln gebildet sind.

Die Formschlusskörper sind in Ausnehmungen des Scheibenkörpers festgelegt und drücken sich bei der Verbindung der Bauteile in den Werkstoff der Bauteile bzw. in deren Beschichtungen ein. Hierdurch wird eine formschlüssige Verbindung der Bauteile erzeugt. Die Sicherungsscheibe wirkt hierbei als Koppelelement. Eine Relativbewegung zwischen den Bauteilen nach der Montage kann so unterbunden werden.

Die Härte der Stahlkugeln beträgt mindestens 55 HRC (Härteprüfung nach dem Rockwell C-Verfahren). Sie bestehen aus gehärtetem Stahl oder einer gehärteten Legierung.

Die Stahlkugeln besitzen ein Übermaß gegenüber den Ausnehmungen im Scheibenkörper und sind in diese eingepresst. So wird unter Spannung eine feste Verbindung der Stahlkugeln im Scheibenkörper hergestellt.

Die Stahlkugeln sind gleichmäßig verteilt auf einem Teilkreis des Scheibenkörpers angeordnet. Hierdurch wird eine gleichmäßige Kraftverteilung bei der Herstellung der Verbindung gewährleistet. Für die Praxis ist es zweckmäßig, vier Stahlkugeln versetzt um jeweils 90° in einem Scheibenkörper anzuordnen.

Das Eindringen der Formschlusskörper in die Bauteile geht bis zur Anlage der Flachseiten des Scheibenkörpers an den Bauteilen.

Die Formschlusskörper weisen eine konvex gestaltete äußere Oberfläche auf. Damit wird erreicht, dass beim Verspannen der Bauteile anfangs eine hohe Flächenpressung wirkt. Die Formschlusskörper drücken sich dann unter Materialverdrängung in die Bauteile, wodurch eine Gegenfläche geschaffen wird. Nach der Montage ist eine zuverlässige Verdreh- und Verrutschsicherheit zwischen den beiden verbundenen Bauteilen gewährleistet.

Die erfindungsgemäße Sicherungsscheibe ist konstruktiv auf unterschiedlichste Anwendungszwecke auslegbar, da die äußere Form des Scheibenkörpers beliebig auf die jeweiligen Einbauabmessungen in Dicke und Durchmesser bestimmbar ist.

Der Durchmesser der Stahlkugeln wird unter Berücksichtigung der Stärke der zu verschraubenden Bauteile gewählt und ist größer als die Dicke des Scheibenkörpers, so dass die Stahlkugeln in Richtung auf die zu verbindenden Bauteile über den Scheibenkörper vorstehen. Vorzugsweise ist der Durchmesser doppelt so dick wie die Dicke des Scheibenkörpers.

Kugeln haben neben einer einfachen rationellen Massenfertigung den Vorteil, dass sie bei der Verbindung anfangs eine hohe Flächenpressung aufgrund einer zunächst punktuellen Kontaktierung erzeugen. Mit zunehmender Verbindung verteilt sich die Pressung auf die größere Fläche der konvexen Kontur einer Kugel.

Die Streckgrenze des Werkstoffs, aus dem der Scheibenkörper besteht, sollte in der Praxis größer oder gleich der Streckgrenze des festeren der beiden zu verbindenden Bauteile sein. Im Zusammenwirken mit den Formschlusskörpern kommt hierfür ein Werkstoff zum Einsatz, der eine Streckgrenze Rₑ von mindestens 250 N/mm² besitzt. Die Formschlusskörper lassen sich dann einfach aber zuverlässig im Scheibenkörper presstechnisch arretieren.

Aus Korrosionsschutzgründen kann der Scheibenkörper beidseitig verzinkt ausgeführt sein. Selbstverständlich ist auch ein anderweitiger Korrosionsschutz möglich.

Gegebenenfalls können Stahlkugeln durch ein Verprägen des Scheibenkörpers fixiert werden. Somit können deutlich höhere Auspresskräfte für die Formschlusskörper erreicht werden, was zu einer erhöhten Prozesssicherheit bei Handling und Montage führt.

Die Erfindung ist nachfolgend anhand eines in den Zeichnungen dargestellten Ausführungsbeispiels näher beschrieben. Es zeigen:
- Figur 1: in vertikaler Schnittdarstellung technisch vereinfacht eine Anordnung von zwei unter Eingliederung einer erfindungsgemäßen Sicherungsscheibe verbundenen Bauteilen;
- Figur 2: eine erfindungsgemäße Sicherungsscheibe in der Draufsicht;
- Figur 3: die Darstellung der Figur 2 in der Seitenansicht und
- Figur 4: einen vertikalen Querschnitt durch die Darstellung der Figur 2 entlang der Linie A-A.

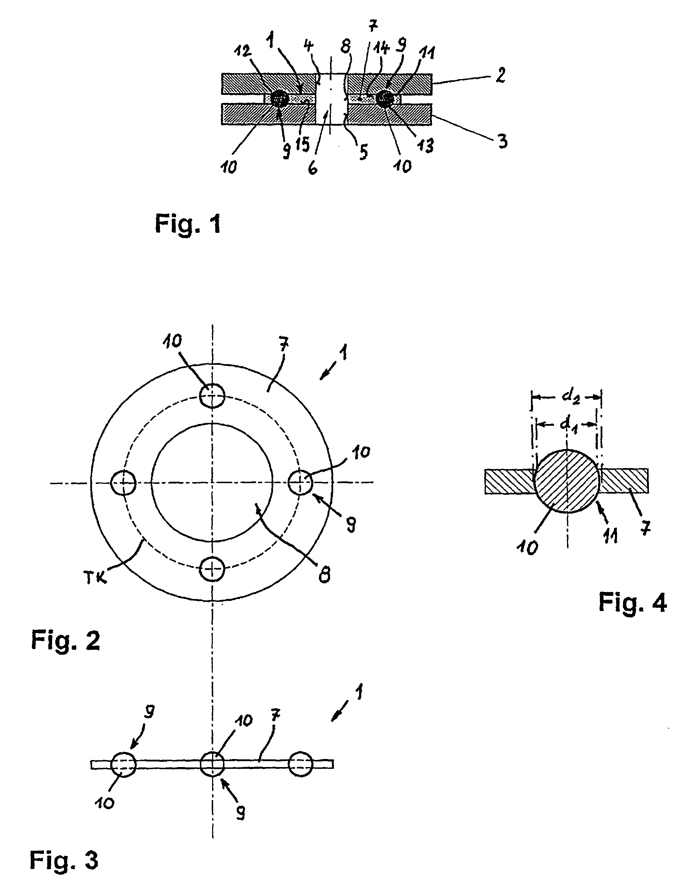

In den Figuren 1 bis 4 ist mit 1 eine Sicherungsscheibe bezeichnet.

Wie die Figur 1 zeigt, ist die Sicherungsscheibe 1 als Zwischenlage zwischen zwei verdrehfest und verrutschfest miteinander zu verbindende Bauteile 2 und 3 eingegliedert. Die Bauteile 2 und 3 weisen dazu Montageöffnungen 4, 5 zur Durchführung eines hier nur andeutungsweise dargestellten Verbindungselements 6 auf.

Die Sicherungsscheibe 1 umfaßt einen Scheibenkörper 7 mit einer Durchführöffnung 8 für das Verbindungselement 6. In Richtung auf die Bauteile 2, 3 besitzt die Sicherungsscheibe 1 vorstehende Formschlusskörper 9. Diese werden von Stahlkugeln 10 gebildet, die in Ausnehmungen 11 des Scheibenkörpers 7 eingepreßt sind.

Beim Verspannen der Bauteile 2 und 3 untereinander mittels des Verbindungselements 6 dringen die Stahlkugeln 10 bereichsweise unter Ausbildung von Vertiefungen 12, 13 in die Oberfläche 14 von Bauteil 2 bzw. die Oberfläche 15 von Bauteil 3 ein. Auf diese Weise wird eine formschlüssige Verbindung zwischen den Bauteilen 2 und 3 durch Eingliederung der Sicherungsscheibe 3 hergestellt. Ein Verdrehen der Bauteile 2 und 3 relativ zueinander nach der Montage wird unterbunden.

Wie die Figur 2 zeigt, sind bei der Sicherungsscheibe 1 vier Stahlkugeln 10 gleichmäßig verteilt auf einem Teilkreis TK des Scheibenkörpers 7 jeweils um 90° versetzt angeordnet.

Der Scheibenkörper 7 besteht aus Stahlblech mit einer Streckgrenze von mindestens 250 N/mm². Zum Korrosionsschutz ist der Scheibenkörper 7 verzinkt. Die Stahlkugeln 10 weisen einen Härtewert von 55 HRC auf.

Bei der Herstellung einer Sicherungsscheibe 1 wird zunächst der Scheibenkörper 6 zur Herstellung der Ausnehmungen 11 vorgelocht. Die Ausnehmungen 11 weisen einen Durchmesser d₁ auf, welcher kleiner bemessen ist als der Durchmesser d₂ der Stahlkugeln 10 (vergleiche hierzu Figur 4). Durch Einpressen der Stahlkugeln 10 in die Ausnehmungen 11 werden diese unter Spannung im Scheibenkörper 7 festgelegt.

### Bezugszeichenaufstellung

- 1 -: Sicherungsscheibe
- 2 -: Bauteil
- 3 -: Bauteil
- 4 -: Montageöffnung
- 5 -: Montageöffnung
- 6 -: Verbindungselement
- 7 -: Scheibenkörper
- 8 -: Durchführöffnung
- 9 -: Formschlusskörper
- 10 -: Stahlkugeln
- 11 -: Ausnehmung
- 12 -: Vertiefung
- 13 -: Vertiefung
- 14 -: Oberfläche v. 2
- 15 -: Oberfläche v. 3

- d₁ -: Durchmesser v. 11
- d₂ -: Durchmesser v. 10
- TK -: Teilkreis

## Patentansprüche

1. Sicherungsscheibe für zwei verdrehfest miteinander zu verbindende Bauteile (2, 3), welche in Richtung auf die Bauteile (2, 3) vorstehende Formschlusskörper (9) besitzt, die in Ausnehmungen (11) eines Scheibenkörpers (7) festgelegt sind, wobei die Formschlusskörper (9) durch in die Ausnehmungen (11) eingepresste Stahlkugeln (10) gebildet sind, wobei die Stahlkugeln (10) gleichmäßig verteilt auf einen Teilkreis (TK) des Scheibenkörpers (7) angeordnet sind und die Stahlkugeln (10) eine Härte von mindestens 55 HRC besitzen und wobei der Scheibenkörper (7) aus einem Werkstoff mit einer Streckgrenze Rₑ größer oder gleiche 250 N/mm² besteht.

## Claims

1. A locking washer for two components (2, 3) which are to be interconnected so as to be non-rotatable relatively to one another, said washer having positive engagement members (9) which project in the direction of the components (2, 3) and which are fixed in recesses (11) of a washer member (7), the positive engagement members (9) being formed by steel balls (10) pressed into the recesses (11), wherein the steel balls (10) are distributed uniformly over a pitch circle (TK) of the washer member (7) and the steel balls (10) have a hardness of at least 55 HRC and wherein the washer member (7) consists of material having a yield point Rₛ greater than or equal to 150 N/mm².

## Revendications

1. Rondelle de blocage pour deux composants (2, 3) à relier solidairement en rotation l'un à l'autre, qui possède des corps de coopération de formes (9) qui font saillie en direction des composants (2, 3) et qui sont immobilisés dans des évidements (11) d'un corps en disque (7), les corps de coopération de formes (9) étant formés par des billes d'acier (10) enfoncées à la presse dans les évidements (11), dans laquelle les billes d'acier (10) sont agencées en répartition régulière sur un cercle partiel (TK) du corps en disque (7) et les billes d'acier (10) possèdent une dureté d'au moins 55 HRC, et dans laquelle le corps en disque (7) est constitué en un matériau avec une limite d'allongement RS supérieure ou égale à 250 N/mm².
